# EUROPEAN PATENT APPLICATION

(11) **EP 4 741 192 A1**
(43) Date of publication of application: **13.05.2026**
(21) Application number: 25204745.1
(22) Date of filing: 25.09.2025
(51) Int. Cl.: B60K 1/00, B60K 11/02

(54) **SUPPORT STRUCTURE OF DRIVING DEVICE**

(30) Priority: 07.11.2024 JP 2024194928
(71) Applicant: Suzuki Motor Corporation, Shizuoka 432-8611 (JP)
(72) Inventor: NAKABAYASHI, Nobuo, HAMAMATSU-SHI, 432-8611 (JP); HATTORI, Soichiro, HAMAMATSU-SHI, 432-8611 (JP); EGUCHI, Hiroyuki, HAMAMATSU-SHI, 432-8611 (JP); HAYASHI, Tsubasa, HAMAMATSU-SHI, 432-8611 (JP); MIYATA, Keisuke, HAMAMATSU-SHI, 432-8611 (JP); SATO, Tatsuki, HAMAMATSU-SHI, 432-8611 (JP); IMAI, Kyohei, HAMAMATSU-SHI, 432-8611 (JP)
(74) Representative: Plasseraud IP

(57) **Abstract**

[Problem to be Solved]

To provide a support structure of a driving device capable of efficiently disposing a connection portion (12C) between a liquid coolant introduction pipe and a liquid coolant discharge pipe, and improving a degree of freedom of disposition of the liquid coolant introduction pipe and the liquid coolant discharge pipe.

[Solution]

In the support structure of a driving device (5), a mount bracket (12) that connects a front wall (8A) of a driving case (8) and a cross member (3) has an annular portion (12B) in which a cylindrical mount bush (11) that is connected to the driving case (8) is accommodated, a member attaching portion (12A) that is connected to the cross member (3), and a connection portion (12C) that connects the annular portion (12B) and the member attaching portion (12A). The connection portion (12C) is formed so that a dimension (W1) in a vehicle width direction is shorter than a dimension (W2) in the vehicle width direction of the annular portion (12B), and is disposed between the coolant introduction pipe (23) and the coolant discharge pipe (24) in the vehicle width direction.

## Description

### [Technical Field]

The present invention relates to a support structure of a driving device.

### [Background Art]

There has been conventionally known a support device for a driving force transmission device in which the driving force transmission device that accommodates a motor generator, gears, and a differential device is supported at a cross member via a rear mount bracket (see Patent Literature 1).

The rear mount bracket has a flange portion that is connected to the cross member, a portion in an annular shape (hereinafter, referred to as an annular portion) that is connected to a front surface of the driving force transmission device, and a portion (hereinafter, referred to as a connection portion) that extends upward from the annular portion in the vertical direction and is connected to the flange portion.

The connection portion is formed so that a dimension in the vehicle width direction becomes gradually larger than the diameter of the annular portion as it progresses upward from the annular portion.

### [Citation List]

### [Patent Literature]

[Patent Literature 1] JP2017-100618A

### [Summary of Invention]

### [Technical Problem]

Incidentally, in the driving force transmission device having a motor generator, an electrical device such as an inverter may be cooled with a coolant.

For this reason, when pipes for allowing the coolant to flow through the driving force transmission device are provided at the front surface (front wall) of the driving force transmission device, the rear mount bracket becomes obstructive to reduce the degree of freedom of disposition of the pipes.

In other words, in the conventional rear mount bracket, since the connection portion is formed so that the dimension in the vehicle width direction becomes gradually larger than the diameter of the annular portion as it progresses upward from the annular portion, the area occupied by the connection portion in the vehicle width direction increases, and the connection portion becomes obstructive to reduce the degree of freedom of disposition of the pipes.

The present invention is made in view of the circumstances as described above and has an object to provide a support structure of a driving device capable of efficiently disposing a connection portion between a liquid coolant introduction pipe and a liquid coolant discharge pipe, and improving a degree of freedom of disposition of the liquid coolant introduction pipe and the liquid coolant discharge pipe.

### [Solution to Problem]

The present invention provides a support structure of a driving device, the support structure including: a driving device having a rotating electric machine, an electric power control device that controls electric power that is supplied to the rotating electric machine, a case that accommodates the rotating electric machine and the electric power control device, a liquid coolant introduction pipe which is connected to a front wall of the case and into which a coolant to cool the electric power control device is introduced, and a liquid coolant discharge pipe which is connected to the front wall of the case and from which a coolant that cools the electric power control device is discharged; a cross member that is provided in front of the driving device and extends in a vehicle width direction; and a mount bracket that connects the front wall of the case and the cross member, the support structure being characterized in that the mount bracket has an annular portion in which a cylindrical mount bush that is connected to the case is accommodated, a member attaching portion that is connected to the cross member, and a connection portion that connects the annular portion and the member attaching portion, and the connection portion is formed so that a dimension in the vehicle width direction is shorter than a dimension in the vehicle width direction of the annular portion, and is disposed between the liquid coolant introduction pipe and the liquid coolant discharge pipe in the vehicle width direction.

### [Advantageous Effect of Invention]

As above, according to the present invention described above, it is possible to efficiently dispose the connection portion between the liquid coolant introduction pipe and the liquid coolant discharge pipe and improve the degree of freedom of disposition of the liquid coolant introduction pipe and the liquid coolant discharge pipe.

### [Brief Description of Drawings]

[Figure 1] Figure 1 is a view showing a support structure of a driving device according to one embodiment of the present invention, which is a bottom view of a rear portion of a vehicle.
[Figure 2] Figure 2 is a sectional view in a direction of arrows II to II in Figure 1.
[Figure 3] Figure 3 is a sectional view in a direction of arrows III to III in Figure 1.
[Figure 4] Figure 4 is a view showing the support structure of the driving device according to one embodiment of the present invention, which is a front view of the driving device.

### [Description of Embodiment]

A support structure of a driving device according to one embodiment of the present invention is a support structure of a driving device, the support structure including: a driving device having a rotating electric machine, an electric power control device that controls electric power that is supplied to the rotating electric machine, a case that accommodates the rotating electric machine and the electric power control device, a liquid coolant introduction pipe which is connected to a front wall of the case and into which a coolant to cool the electric power control device is introduced, and a liquid coolant discharge pipe which is connected to the front wall of the case and from which a coolant that cools the electric power control device is discharged; a cross member that is provided in front of the driving device and extends in a vehicle width direction; and a mount bracket that connects the front wall of the case and the cross member, wherein the mount bracket has an annular portion in which a cylindrical mount bush that is connected to the case is accommodated, a member attaching portion that is connected to the cross member, and a connection portion that connects the annular portion and the member attaching portion, and the connection portion is formed so that a dimension in the vehicle width direction is shorter than a dimension in the vehicle width direction of the annular portion, and is disposed between the liquid coolant introduction pipe and the liquid coolant discharge pipe in the vehicle width direction.

Accordingly, the support structure of a driving device according to the one embodiment of the present invention is capable of efficiently disposing the connection portion between the liquid coolant introduction pipe and the liquid coolant discharge pipe and improving the degree of freedom of disposition of the liquid coolant introduction pipe and the liquid coolant discharge pipe.

### [Embodiment]

Hereinafter, a support structure of a driving device according to one embodiment of the present invention will be described by using the drawings.

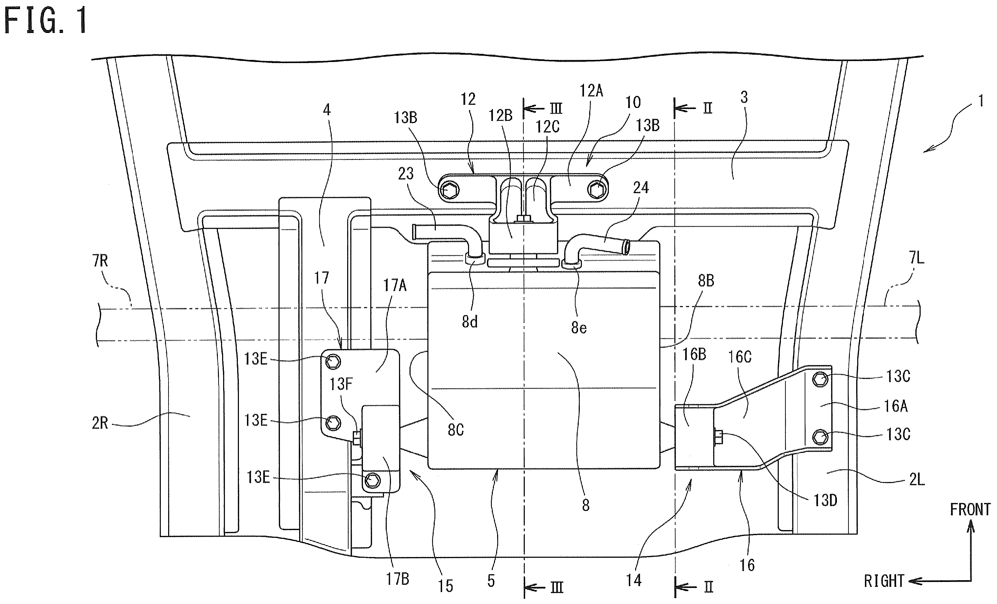

Figure 1 to Figure 4 are views showing the support structure of the driving device according to one embodiment of the present invention.

First, a configuration will be described.

In Figure 1 to Figure 4, up-down, front-rear, and left-right directions are based on the driving device in a state of being disposed in a vehicle, a front-rear direction of the vehicle is defined as a front-rear direction, a left-right direction (vehicle width direction) of the vehicle is defined as a left-right direction, and an up-down direction (height direction) of the vehicle is defined as an up-down direction.

As shown in Figure 1, a vehicle 1 includes a left side member 2L, a right side member 2R, a cross member 3, and a sub-side member 4.

The left side member 2L and the right side member 2R are disposed to be spaced apart in the vehicle width direction and extend in the front-rear direction. The vehicle width direction is the left-right direction.

The cross member 3 extends in the vehicle width direction, and left and right end portions thereof are connected to the left side member 2L and the right side member 2R. In the sub-side member 4, a front end portion is connected to the cross member 3, and a rear end portion is connected to a cross member on a rear side not illustrated.

The driving device 5 is disposed in a space surrounded by the left side member 2L, the sub-side member 4, and the cross member 3.

Specifically, the driving device 5 is disposed between the left side member 2L and the sub-side member 4 in the vehicle width direction and is disposed behind the cross member 3 in the front-rear direction. That is, the cross member 3 is disposed in front of the driving device 5.

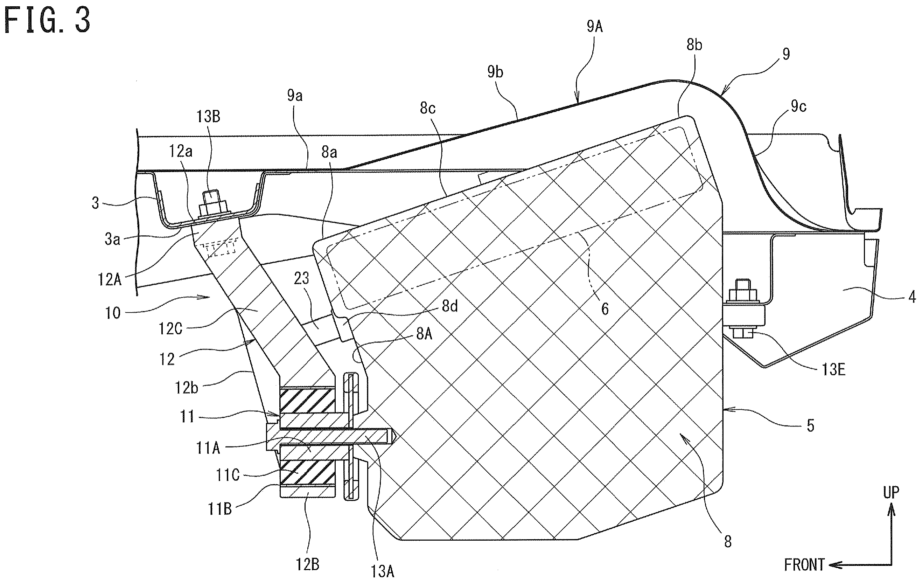

The driving device 5 has a motor generator not illustrated as a rotating electric machine, an inverter 6 (see Figure 3) as an electric power control device that is provided above the motor generator and controls electric power that is supplied to the motor generator, a speed reducer not illustrated that reduces driving power (rotational speed) of the motor generator, and a differential device not illustrated that transmits the power of the speed reducer to left and right rear wheels not illustrated via a left drive shaft 7L and a right drive shaft 7R.

The motor generator, the inverter 6, the speed reducer, and the differential device are accommodated in a driving case 8. The driving case 8 of the present embodiment configures a case.

The motor generator has a function as an electric motor that drives by electric power supplied from a high voltage battery not illustrated via the inverter 6, and a function as a generator that performs power generation by reverse driving power inputted from the differential device.

The inverter 6 converts DC electric power supplied from the high voltage battery into AC electric power of three phases to supply the AC electric power of three phases to the motor generator, and converts the AC electric power of three phases generated by the motor generator into DC electric power to charge the high voltage battery with it. The high voltage battery is composed by, for example, a secondary cell such as a lithium-ion battery.

As shown in Figure 3, the inverter 6 is disposed at an uppermost position of the driving case 8 to be positioned more upward than the motor generator, the speed reducer, and the differential device, and extends from an upper front end portion 8a to an upper rear end portion 8b in a space of an upper portion of the driving case 8.

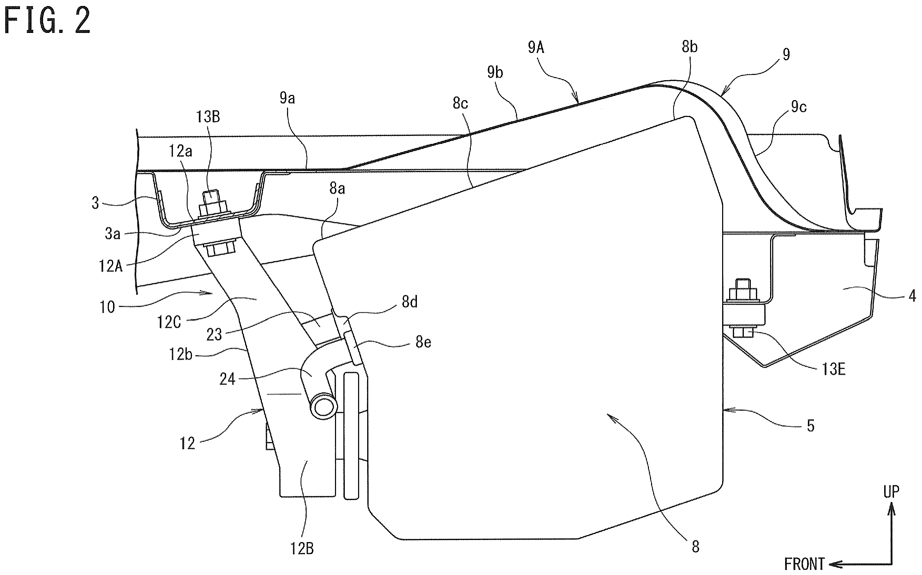

As shown in Figure 2 and Figure 3, the driving device 5 is disposed below a floor panel 9, and is positioned at a rear portion of the vehicle 1. At a front portion of the vehicle 1, a driving source, and left and right driving shafts and left and right front wheels to which power of the driving source is transmitted, all of which are not illustrated, are disposed.

The vehicle 1 of the present embodiment travels in a two-wheel drive mode when only the driving source on the front side is driven, and travels in a four-wheel drive mode when both the driving source and the driving device 5 are driven. The driving source on the front side is not particularly limited.

The driving device 5 is elastically supported at the cross member 3 by a front side mount device 10. As shown in Figure 3, the front side mount device 10 has a mount bush 11 and a mount bracket 12. The front side mount device 10 of the present embodiment configures a mount device.

The mount bush 11 includes an inner cylinder 11A in which a central axis extends in the front-rear direction, an outer cylinder 11B that is provided outward in a radial direction of the inner cylinder 11A and has a central axis extending in the front-rear direction, and a mount rubber 11C that is provided between the inner cylinder 11A and the outer cylinder 11B in the radial direction and connects the inner cylinder 11A and the outer cylinder 11B, and the mount bush 11 is formed in a cylindrical shape as a whole.

The inner cylinder 11A is fastened (connected) to a lower portion of a front wall 8A of the driving case 8 by a bolt 13A, and the mount bush 11 is disposed so that a central axis extends in the front-rear direction.

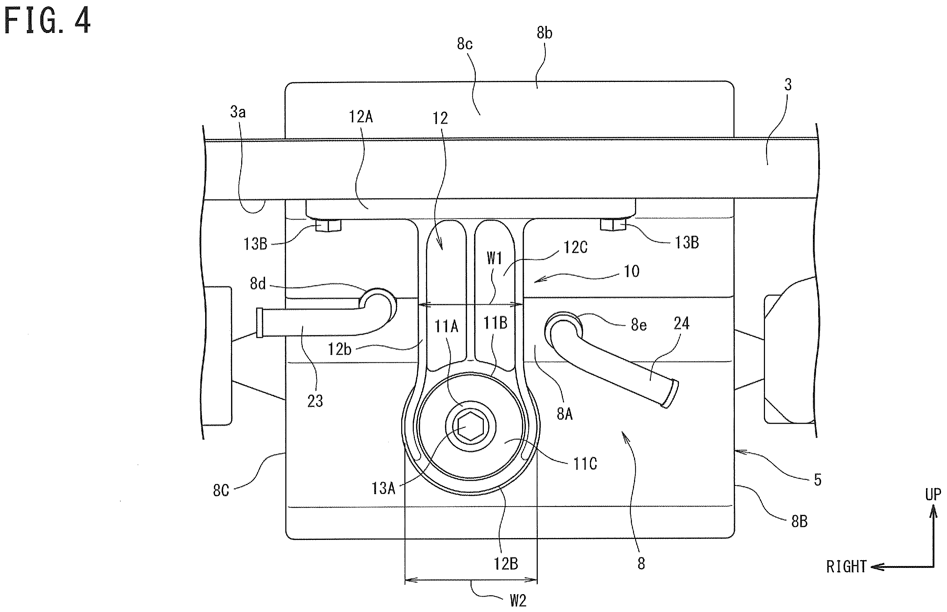

As shown in Figure 3 and Figure 4, the mount bracket 12 has a member attaching portion 12A that extends in the vehicle width direction and is fastened (connected) to a lower surface 3a of the cross member 3 by a bolt 13B, an annular portion 12B that accommodates the mount bush 11 by the mount bush 11 being press-fitted therein, and a connection portion 12C that connects the annular portion 12B and the member attaching portion 12A. That is, the mount bracket 12 connects the front wall 8A of the driving case 8 and the mount bracket 12.

As shown in Figure 2 and Figure 3, the connection portion 12C is inclined obliquely upward toward the front side from the annular portion 12B toward the member attaching portion 12A so that the annular portion 12B is positioned at a rear side with respect to the member attaching portion 12A, and the member attaching portion 12A is positioned at the front side with respect to the annular portion 12B.

In other words, the connection portion 12C inclines forward as it progresses from the annular portion 12B toward the member attaching portion 12A above the annular portion 12B.

A lower surface 3a of the cross member 3 is formed into an inclined surface that is inclined downward from the rear to the front, and an upper surface 12a of the member attaching portion 12A abuts on the lower surface 3a of the cross member 3.

As shown in Figure 1, a left mount device 14 and a right mount device 15 are attached to the driving device 5, and the driving device 5 is elastically supported at the left side member 2L and the sub-side member 4 by the left mount device 14 and the right mount device 15.

The left mount device 14 has a mount bracket 16. The mount bracket 16 has a member attaching portion 16A that is fastened (connected) to a lower surface of the left side member 2L by bolts 13C, an annular portion 16B in which a cylindrical mount bush not illustrated and including a mount rubber is accommodated, and a connection portion 16C that connects the annular portion 16B and the member attaching portion 16A.

The member attaching portion 16A is positioned more upward than the annular portion 16B, and the connection portion 16C extends in the vehicle width direction. The mount bush of the left mount device 14 is connected to a left side wall 8B of the driving case 8 by a bolt 13D.

The right mount device 15 has a mount bracket 17. The mount bracket 17 has a member attaching portion 17A that is fastened (connected) to a lower surface of the sub-side member 4 by bolts 13E, and an annular portion 17B in which a cylindrical mount bush not illustrated and including a mount rubber is accommodated, and the member attaching portion 17A is positioned more upward than the annular portion 17B. The mount bush of the right mount device 15 is connected to a right side wall 8C of the driving case 8 by a bolt 13F.

In the front side mount device 10, the left mount device 14, and the right mount device 15, the annular portions 12B, 16B, and 17B are positioned at lowermost positions.

In other words, the driving device 5 is elastically supported by the left side member 2L, the sub-side member 4, and the cross member 3 in such a manner as to be suspended from the left side member 2L, the sub-side member 4, and the cross member 3 by the front side mount device 10, the left mount device 14, and the right mount device 15.

As shown in Figure 2 and Figure 3, the driving device 5 is disposed in a forward inclined state so that the upper front end portion 8a of the driving case 8 is positioned more downward than the lower surface 3a of the cross member 3, and the upper rear end portion 8b is positioned more upward than the lower surface 3a of the cross member 3.

In other words, the driving device 5 is disposed in a forward inclined state so that the upper front end portion 8a of the driving case 8 is positioned more downward than the upper rear end portion 8b.

A bulged portion 9A is formed at the floor panel 9, and the bulged portion 9A bulges upward from a horizontal portion 9a of the floor panel 9.

The bulged portion 9A has an inclined portion 9b and a rear wall portion 9c. The inclined portion 9b faces the upper surface 8c of the driving case 8 in the up-down direction, and inclines upward from a front end portion to a rear end portion. That is, a gap is formed between the inclined portion 9b and the upper surface 8c of the driving case 8.

Since the driving device 5 is disposed in a forward inclined state, the driving device 5 enters a vehicle interior from the horizontal portion 9a of the floor panel 9. Accordingly, it is possible to prevent a dimension in the up-down direction of the vehicle 1 from increasing and reduce the size of the vehicle 1.

As shown in Figure 4, the front wall 8A of the driving case 8 is provided with a coolant introduction pipe 23, and a coolant discharge pipe 24, and the coolant introduction pipe 23 and the coolant discharge pipe 24 are connected to boss portions 8d and 8e formed at the front wall 8A. The front wall 8A of the driving case 8 configures a front wall of the case.

The coolant introduction pipe 23 introduces cooling water into the driving case 8. The cooling water introduced into the driving case 8 is supplied around the inverter 6, and thereby the inverter 6 is cooled by the cooling water.

The cooling water that cools the inverter 6 is discharged through the coolant discharge pipe 24 from inside of the driving case 8.

Note that a radiator not illustrated is disposed in front of the driving device 5, and coolant pipes not illustrated and passing the cooling water to and from the radiator are connected to the coolant introduction pipe 23 and the coolant discharge pipe 24.

Since the coolant introduction pipe 23 and the coolant discharge pipe 24 of the present embodiment are provided at boss portions 8d and 8e of the front wall 8A of the driving case 8, it is possible to shorten lengths of the coolant pipes.

The coolant introduction pipe 23 of the present embodiment configures a liquid coolant introduction pipe, and the coolant discharge pipe 24 configures a liquid coolant discharge pipe. Note that the coolant that cools the inverter 6 is not limited to the cooling water.

As shown in Figure 2 and Figure 3, the coolant introduction pipe 23 and the coolant discharge pipe 24 are positioned more rearward than a front end portion 12b of the connection portion 12C, and, as shown in Figure 4, bent in the vehicle width direction from the front wall 8A of the driving case 8 to face the connection portion 12C in the vehicle width direction to extend in the vehicle width direction.

In other words, the coolant introduction pipe 23 extends forward from the front wall 8A (boss portion 8d) of the driving case 8, thereafter is bent rightward and extends to be away from the connection portion 12C in the vehicle width direction. The coolant discharge pipe 24 extends forward from the front wall 8A (boss portion 8e) of the driving case 8, thereafter is bent leftward and extends to be away from the connection portion 12C in the vehicle width direction.

As shown in Figure 4, the connection portion 12C is formed so that a dimension W1 in the vehicle width direction is shorter than a dimension W2 in the vehicle width direction of the annular portion 12B, and is disposed between the coolant introduction pipe 23 and the coolant discharge pipe 24 in the vehicle width direction. The dimension W2 in the vehicle width direction of the annular portion 12B corresponds to a diameter of the annular portion 12B.

Next, an effect of the support structure of the driving device 5 of the present embodiment will be described.

The support structure of the driving device 5 of the present embodiment includes the driving device 5 that has the motor generator, the inverter 6 that controls electric power that is supplied to the motor generator, the driving case 8 that accommodates the motor generator and the inverter 6, the coolant introduction pipe 23 which is connected to the front wall 8A of the driving case 8 and into which the cooling water to cool the inverter 6 is introduced, and the coolant discharge pipe 24 which is connected to the front wall 8A of the driving case 8 and from which the cooling water that cools the inverter 6 is discharged.

Furthermore, the support structure of the driving device 5 of the present embodiment includes the cross member 3 that is provided in front of the driving device 5 and extends in the vehicle width direction, and the mount bracket 12 that connects the driving case 8 and the cross member 3.

The mount bracket 12 has the annular portion 12B in which the cylindrical mount bush 11 connected to the front wall 8A of the driving case 8 is accommodated, the member attaching portion 12A connected to the cross member 3, and the connection portion 12C that connects the annular portion 12B and the member attaching portion 12A.

The connection portion 12C is formed so that the dimension in the vehicle width direction is shorter than the dimension in the vehicle width direction of the annular portion 12B, and is disposed between the coolant introduction pipe 23 and the coolant discharge pipe 24 in the vehicle width direction.

Accordingly, the area occupied by the connection portion 12C with respect to the front wall 8A of the driving case 8 is reduced to make it possible to efficiently dispose the connection portion 12C between the coolant introduction pipe 23 and the coolant discharge pipe 24 and improve the degree of freedom of disposition of the coolant introduction pipe 23 and the coolant discharge pipe 24.

Furthermore, according to the support structure of the driving device 5 of the present embodiment, in the mount bracket 12, the member attaching portion 12A is positioned more forward than the annular portion 12B.

Accordingly, when the mount bracket 12 is attached to the lower surface 3a of the cross member 3 by the bolts 13B in the state in which the mount bracket 12 is attached to the front wall 8A of the driving case 8, it is possible to attach the mount bracket 12 to the cross member 3 while preventing the coolant introduction pipe 23 and the coolant discharge pipe 24 from interfering with a tool that fastens the bolts 13B. As a result, it is possible to improve workability of attaching work of the driving device 5 to the cross member 3.

Furthermore, according to the support structure of the driving device 5 of the present embodiment, as a result of the member attaching portion 12A being disposed more upward than the annular portion 12B, the driving device 5 is suspended from the cross member 3.

The lower surface 3a of the cross member 3 is formed to be the inclined surface that inclines downward from the rear side toward the front side.

The connection portion 12C inclines forward as it progresses from the annular portion 12B toward the member attaching portion 12A above the annular portion 12B, and the upper surface 12a of the member attaching portion 12A abuts on the lower surface of the cross member 3.

Accordingly, the connection portion 12C is oriented in a straight line between the member attaching portion 12A and the annular portion 12B, and the upper surface 12a of the member attaching portion 12A can be caused to abut on the lower surface 3a of the cross member 3.

For this reason, it is possible to connect the member attaching portion 12A and the annular portion 12B by the connection portion 12C in a shape of an approximately straight line, and it is possible to connect the driving device 5 and the cross member 3 by the member attaching portion 12A, the connection portion 12C, and the annular portion 12B in a shape of an approximately straight line.

As a result, it is possible to increase stiffness of the mount bracket 12, and it is possible to improve stiffness in support of the driving device 5 by the mount bracket 12.

Although the embodiment of the present invention is disclosed, it is apparent that modifications can be added by those skilled in the art without departing from the scope of the present invention. It is intended that all such modifications and equivalents are included in the following claims.

### [Reference Signs List]

1... vehicle, 3... cross member, 3a...lower surface (lower surface of cross member), 5...driving device, 6...inverter (electric power control device), 8... driving case (case), 11...mount bush, 12...mount bracket, 12A...member attaching portion, 12a...upper surface (upper surface of member attaching portion), 12B...annular portion, 12C... connection portion, 23 ... coolant introduction pipe (liquid coolant introduction pipe), 24... coolant discharge pipe (liquid coolant discharge pipe)

## Claims

1. A support structure of a driving device, the support structure comprising:
a driving device (5) having a rotating electric machine, an electric power control device (6) that controls electric power that is supplied to the rotating electric machine, a case (8) that accommodates the rotating electric machine and the electric power control device (6), a liquid coolant introduction pipe (23) which is connected to a front wall (8A) of the case (8) and into which a coolant to cool the electric power control device (6) is introduced, and a liquid coolant discharge pipe (24) which is connected to the front wall (8A) of the case (8) and from which a coolant that cools the electric power control device (6) is discharged;
a cross member (3) that is provided in front of the driving device (5) and extends in a vehicle width direction; and
a mount bracket (12) that connects the front wall (8A) of the case (8) and the cross member (3), the support structure being **characterized in that**
the mount bracket (12) has
an annular portion (12B) in which a cylindrical mount bush (11) that is connected to the case (8) is accommodated,
a member attaching portion (12A) that is connected to the cross member (3), and
a connection portion (12C) that connects the annular portion (12B) and the member attaching portion (12A), and
the connection portion (12C) is formed so that a dimension (W1) in the vehicle width direction is shorter than a dimension (W2) in the vehicle width direction of the annular portion (12B), and is disposed between the liquid coolant introduction pipe (23) and the liquid coolant discharge pipe (24) in the vehicle width direction.

2. The support structure of a driving device as claimed in claim 1, wherein in the mount bracket (12), the member attaching portion (12A) is positioned more forward than the annular portion (12B).

3. The support structure of a driving device as claimed in claim 1 or claim 2, wherein
the member attaching portion (12A) is disposed more upward than the annular portion (12B), and thereby the driving device (5) is suspended from the cross member (3),
a lower surface (3a) of the cross member (3) is formed to be an inclined surface that inclines downward as the lower surface (3a) progresses from a rear side toward a front side,
the connection portion (12C) inclines forward as the connection portion (12C) progresses from the annular portion (12B) toward the member attaching portion (12A) above the annular portion (12B), and
an upper surface (12a) of the member attaching portion (12A) abuts on the lower surface (3a) of the cross member (3).
